# EUROPEAN PATENT SPECIFICATION

(11) **EP 3 913 650 B1**
(45) Date of publication and mention of the grant of the patent: **10.04.2024**
(21) Application number: 21305620.3
(22) Date of filing: 12.05.2021
(51) Int. Cl.: H01H 3/42, H01H 1/20, H01H 1/22, H01H 3/46

(54) **MANUAL DUAL-POWER TRANSFER SWITCH**
MANUELLER DUAL-POWER-TRANSFERSCHALTER
COMMUTATEUR DE TRANSFERT MANUEL À DOUBLE SOURCE D'ALIMENTATION

(30) Priority: 19.05.2020 CN 202020842986 U
(43) Date of publication of application: 24.11.2021
(73) Proprietor: Schneider Electric Industries SAS, 92500 Rueil-Malmaison (FR)
(72) Inventor: LIU, Zhenzhong, Shanghai, 201203 (CN); SUN, Haitao, Shanghai, 201203 (CN); ZHOU, Yan, Shanghai, 201203 (CN); MENG, Yun, Shanghai, 201203 (CN)
(74) Representative: Manitz Finsterwald Patent- und Rechtsanwaltspartnerschaft mbB

(56) References cited:
- EP-A1- 2 963 665
- WO-A1-2017/136103
- CN-U- 207 925 334

## Description

### TECHNICAL FIELD

The disclosure relates to a manual dual-power transfer switch.

### BACKGROUND

With continuous improvement of people's requirements for power supply continuity, the application of dual-power transfer switches is becoming more and more extensive. For manual transfer switches, it has been increasingly used because of its simple structure, low price and convenient maintenance.

There are two types of manual dual-power transfer switches in the prior art: one is a manual transfer switch assembled by adding a mechanical interlock between two microswitches and the other is a manual transfer switch in which an automatic transfer switch also serves as a manual transfer switch. These products all have the disadvantages of large size and complex structure, especially when the space of distribution box is tight, such as 5G base station. How to invent a product which is small in size, simple in structure and meets the requirements of manual dual-power transfer switch will undoubtedly fill the gap in the market and show its competitive advantages in other occasions. CN 207 925 334 U discloses a dual-power transfer switch, including a first phase line switch and a second phase line switch. The first phase line switch is electrically connectable to a first power source and the second phase line switch is electrically connectable to a second power source. The dual-power transfer switch can selectively turn on or off the electrical connection of the first phase line switch to the first power source and/or turn on or off the electrical connection of the second phase line switch to the second power source using a spindle, a first rod, and a second rod, wherein the spindle can rotate and drive the first rod and the second rod.

### SUMMARY

The present disclosure provides a manual dual power supply transfer switch according to the independent claim. Embodiments are given in the subclaims, the description and the drawings.

In order to solve the above-mentioned one or more defects in the prior art, according to one aspect of the present disclosure, there is provided a manual dual-power transfer switch, which comprises a four-bar linkage, a first movable contact, a second movable contact, a first power terminal electrically connected with a first power supply, a second power terminal electrically connected with a second power supply, a first load static contact and a second load static contact accommodated in a switch housing. The elevator controller is configured to collect status information of an elevator car and fault information when an elevator fails.

The movement of the four-bar linkage acts on the first movable contact and the second movable contact at the same time, so that the manual dual-power transfer switch has the following states:
a state in which the first power supply is closed, wherein only the first movable contact is connected between the first power supply terminal and the first load stationary contact; or
a state in which the second power supply is closed, wherein only the second movable contact is connected between the second power supply terminal and the second load stationary contact; or
a duel-open state in which the first movable contact is not connected between the first power terminal and the first load static contact and the second movable contact is not connected between the second power terminal and the second load static contact.

According to some aspects of the present disclosure, the four-bar linkage includes a switch handle, a cam, and a connecting rod connected between the switch handle and the cam.

According to some aspects of the present disclosure, the switch handle is pivotally mounted on the switch housing about a handle axis.

The cam rotates around a cam axis.

One end of the connecting rod is eccentrically connected to the switch handle relative to the handle axis.

The other end of the connecting rod is eccentrically connected to the cam relative to the cam axis.

Rotation of the switch handle drives rotation of the cam through the connecting rod.

According to some aspects of the present disclosure, the manual dual power transfer switch further includes a first spring and a second spring.

One end of the first spring acts on the switch housing.

The other end of the first spring acts on the first movable contact.

One end of the second spring acts on the switch housing.

And the other end of the second spring acts on the second movable contact.

According to some aspects of the present disclosure, the first movable contact is pivotally connected to the first power supply terminal.

The second movable contact is pivotally connected to the second power terminal.

According to some aspects of the present disclosure, the first movable contact is pivotally connected to the first load stationary contact.

The second movable contact is pivotally connected to the second load stationary contact.

According to some aspects of the present disclosure, in a state in which the first power supply is not closed, either end of the first movable contact is not in contact with the first power supply terminal or the first load stationary contact.

In the state in which the first power supply is closed, both ends of the first movable contact are in contact with the first power supply terminal and the first load stationary contact at the same time.

In a state in which the second power supply is not closed, either end of the second movable contact is not in contact with the second power supply terminal or the second load static contact.

In the state in which the second power supply is closed, both ends of the second movable contact are in contact with the second power supply terminal and the second load stationary contact at the same time.

According to the above aspect of the present disclosure, the first movable contact has a first movable contact mating portion.

And the second movable contact is provided with a second movable contact mating portion.

The first movable contact mating portion and the second movable contact mating portion keep contact with an outer contour of the cam.

According to some aspects of the present disclosure, the outer contour of the cam has a first cam mating portion and a second cam mating portion.

The outer contour of the cam also has a portion of a first radius of curvature and a portion of a second radius of curvature.

The second radius of curvature is larger than the first radius of curvature.

According to some aspects of the present disclosure, when the switch handle is in its first position, the first movable contact mating portion keeps contact with the portion of the first radius of curvature of the cam and the second movable contact mating portion keeps contact with the portion of the second radius of curvature of the cam through the connecting rod, and at this time the first movable contact is connected between the first power supply terminal and the first load static contact.

When the switch handle is in its second position, the first movable contact mating portion keeps contact with the portion of the second radius of curvature of the cam while the second movable contact mating portion keeps contact with the portion of the first radius of curvature of the cam through the connecting rod, and at this time the second movable contact is connected between the second power terminal and the second load static contact.

When the switch handle is in the dual-open position, the first movable contact mating portion keeps in contact with the first cam mating portion and the second movable contact mating portion keeps in contact with the second cam mating portion through the connecting rod. At this time, the first movable contact is not connected between the first power supply terminal and the first load static contact and the second movable contact is not connected between the second power supply terminal and the second load static contact.

According to the technical solutions of the present disclosure, the terminals and contacts of the first power supply and the second power supply are placed in a housing with the same volume as MCB in the prior art, so that the final manual dual-power transfer switch (MTS) has the same volume as MCB, i.e., its width is less than half of that of the prior art products, and its other dimensions and characteristics are retained the same as those of the prior art, so that the standard products such as MTS and MCB can be installed with DIN standards, and have the advantage of small size to meet market demand.

### BRIEF DESCRIPTION OF THE DRAWINGS

Those skilled in the art will have a better understanding of this disclosure through the following drawings, and the advantages of this disclosure can be more clearly reflected. The drawings described herein are only for illustrative purposes of selected embodiments, not all possible implementations and are intended to limit the scope of the present disclosure.
Figs. 1 to 3 illustrate a first embodiment according to the present disclosure;
Fig. 4 shows a second embodiment according to the present disclosure;
Fig. 5 shows a third embodiment according to the present disclosure.

### DETAILED DESCRIPTION OF THE PREFERRED EMBODIMENTS

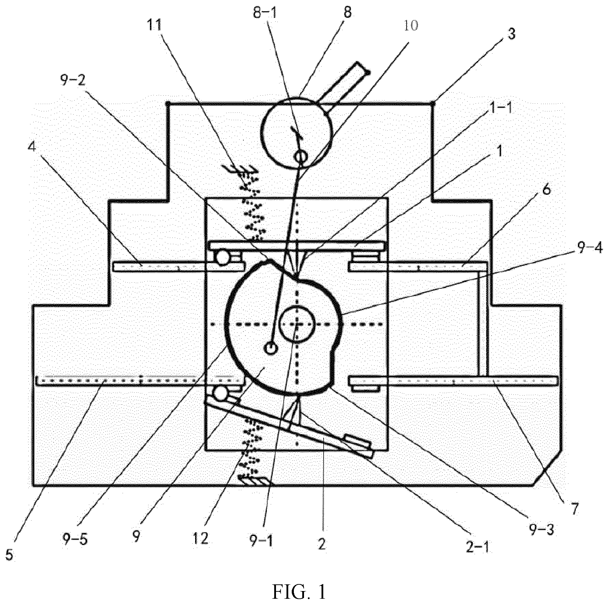

With reference to Fig. 1 to Fig. 5, specific embodiments of the present disclosure will be described in detail below.

According to an embodiment of the present disclosure, as shown in Fig. 1 to Fig. 3, there is provided a manual dual-power transfer switch, which includes a four-bar linkage, a first movable contact 1, a second movable contact 2, a first power terminal 4 electrically connected with a first power supply (not shown), a second power terminal 5 electrically connected with a second power supply (not shown), and a first load stationary contact 6 accommodated in a switch housing 3.

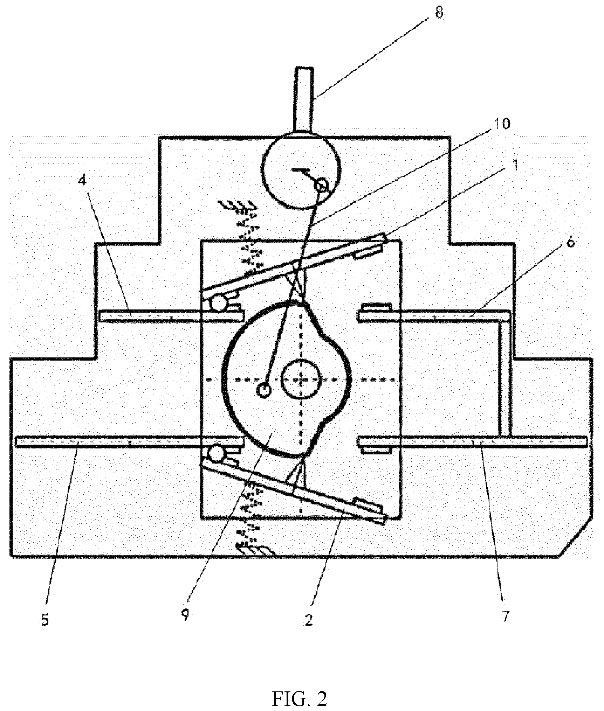

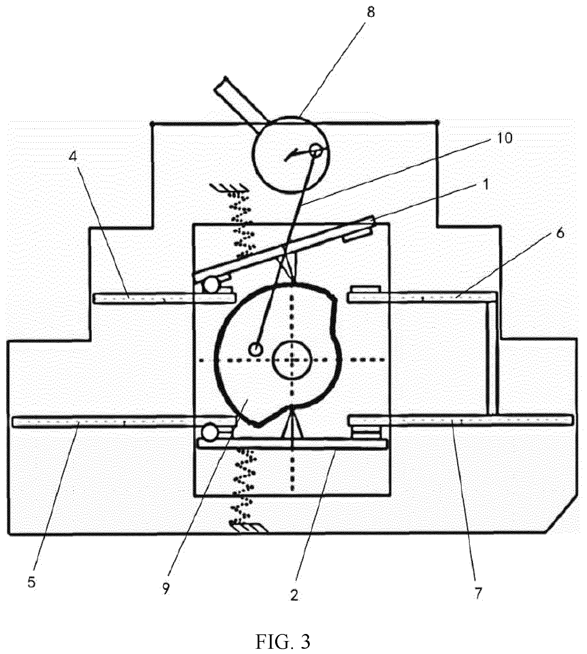

The movement of the four-bar linkage mechanism acts on the first movable contact 1 and the second movable contact 2 at the same time, so that the manual dual-power transfer switch has the following states:
a state in which the first power supply is closed (as shown in Fig. 1), in which only the first movable contact 1 is connected between the first power supply terminal 4 and the first load stationary contact 6; or
a state in which the second power supply is closed (as shown in Fig. 3), in which only the second movable contact 2 is connected between the second power supply terminal 5 and the second load stationary contact 7; or
a dual-open state (as shown in Fig. 2), in which the first movable contact 1 is not connected between the first power terminal 4 and the first load static contact 6 and
the second movable contact 2 is not connected between the second power terminal 5 and the second load static contact 7.

According to the above embodiment of the present disclosure, the four-bar linkage includes a switch handle 8, a cam 9 and a connecting rod 10 connected between the switch handle 8 and the cam 9.

According to the above embodiment of the present disclosure, the switch handle 8 can be pivotally mounted on the switch housing 3 around the handle axis 8-1.

The cam 9 rotates around a cam axis 9-1.

One end of the connecting rod 10 is eccentrically connected to the switch handle 8 relative to the handle axis 8-1.

The other end of the connecting rod 10 is eccentrically connected to the cam 9 relative to the cam axis 9-1.

Rotation of the switch handle 8 drives rotation of the cam 9 through the connecting rod 10.

According to the above embodiment of the present disclosure, the manual dual power transfer switch further includes a first spring 11 and a second spring 12.

One end of the first spring 11 acts on the switch housing 3.

The other end of the first spring 11 acts on the first movable contact 1 and applies a force to close the first movable contact 1.

One end of the second spring 12 acts on the switch housing 3.

The other end of the second spring 12 acts on the second movable contact 2 and applies a force to close the second movable contact 2.

According to the above embodiment of the present disclosure, the first movable contact 1 is pivotally connected to the first power terminal 4.

The second movable contact 2 is pivotally connected to the second power terminal 5.

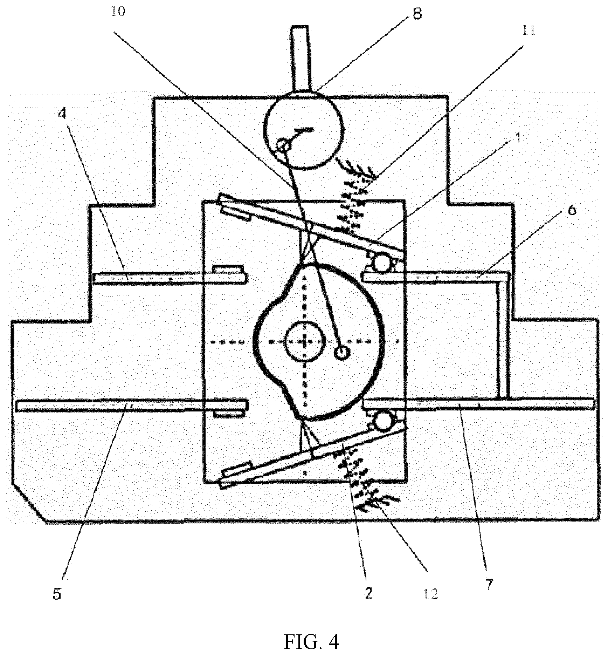

According to a second embodiment of the present disclosure (as shown in Fig. 4), the first movable contact 1 is pivotally connected to the first load stationary contact 6.

The second movable contact 2 is pivotally connected to the second load stationary contact 7.

In this embodiment, the first power supply terminal 4 and the second power supply terminal 5 are both electrified, while the first load static contact 6 and the second load static contact 7 are not electrified, making the switch handle 8 to be in a relatively safe state when the manual dual-power transfer switch is in the dual-open state and in the sate in which the first power supply is open.

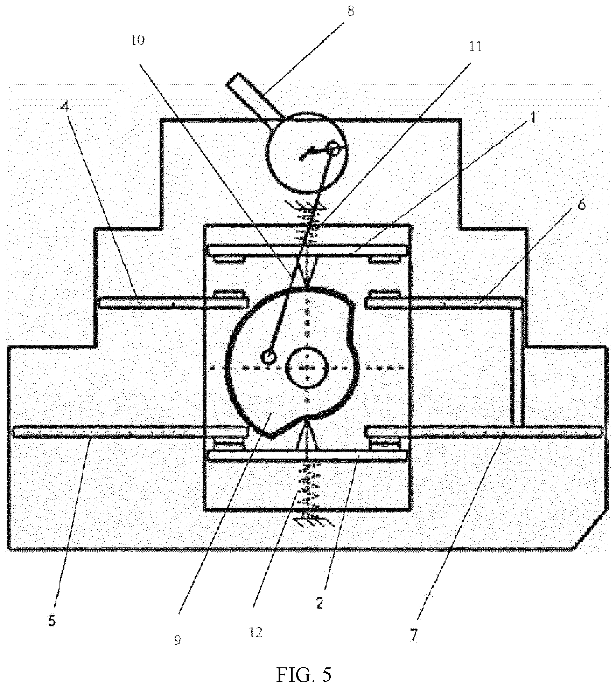

According to a third embodiment of the present disclosure (as shown in Fig. 5), in the state in which the first power supply is not closed, either end of the first movable contact 1 is not in contact with the first power supply terminal 4 or the first load stationary contact 6.

In the state in which the second power supply is closed (as shown in Fig. 5), both ends of the second movable contact 2 are in contact with the second power supply terminal 5 and the second load stationary contact 7 at the same time.

In the state in which the first power supply is closed (not shown in Fig. 5), both ends of the first movable contact 1 are in contact with the first power supply terminal 4 and the first load stationary contact 6 at the same time.

In the state in which the second power supply is not closed (not shown in Fig. 5), either end of the second movable contact 2 is not in contact with the second power supply terminal 5 or the second load stationary contact 7.

According to the above embodiment of the present disclosure, the first movable contact 1 has a first movable contact mating portion 1-1.

The second movable contact 2 has a second movable contact mating portion 2-1.

The first movable contact mating portion 1-1 and the second movable contact mating portion 2-1 keep contact with an outer contour of the cam 9.

According to the above embodiment of the present disclosure, the outer contour of the cam 9 has, for example but not limited to, a first cam mating portion 9-2 and a second cam mating portion 9-3 which are in form of recesses.

The outer contour of the cam 9 also has a portion of a first radius of curvature 9-4 and a portion of a second radius of curvature 9-5.

The second radius of curvature is larger than the first radius of curvature.

Next, the operation of the manual dual-power transfer switch according to the present disclosure will be described in detail with reference to Figs. 1 to 3.When the switch handle 8 is in its first position (as shown in fig. 1), through the connecting rod 10, the first movable contact mating portion 1-1 keeps in contact with the portion of the first radius of curvature 9-4 of the cam 9, while the second movable contact mating portion 2-1 keeps in contact with the portion of the second radius of curvature 9-5 of the cam 9; at this time, the first movable contact 1 is connected between the first power terminal 4 and the first load stationary contact 6.

As shown in Fig. 2, when the switch handle 8 is turned manually to be in the dual-open state, the cam 9 is driven to rotate through the connecting rod 10, and the first movable contact mating portion 1-1 keeps in contact with the first cam mating portion 9-2 (for example, in a recess) while the second movable contact mating portion 2-1 keeps in contact with the second cam mating portion 9-3 (for example, in a recess). At this time, the first movable contact 1 is not connected between the first power terminal 4 and the first load static contact 6 and the second movable contact 2 is not connected between the second power terminal 5 and the second load static contact 7.

The radius of curvature of the first cam mating portion 9-2 and the radius of curvature of the second cam mating portion 9-3 are substantially equal to the second radius of curvature of the portion of the second radius of curvature 9-5.

As shown in Fig. 3, when the switch handle 8 is turned manually to be in the second position, the cam 9 is driven to rotate through the connecting rod 10, and the first movable contact mating portion 1-1 keeps in contact with the portion of the second radius of curvature 9-5 of the cam 9, while the second movable contact mating portion 2-1 keeps in contact with the portion of the first radius of curvature 9-4 of the cam.

Through the above detailed description of the operation of the first embodiment of the manual dual-power transfer switch according to the present disclosure in conjunction with Figs. 1 to 3, those skilled in the art can know that the embodiments in Figs. 4 to 5 can realize the operation with the same effect.

## Claims

1. A manual dual-power supply transfer switch, the switch comprising:
a four-bar linkage, a first movable contact (1), a second movable contact (2), a first power terminal (4) electrically connected with the first power supply, a second power terminal (5) electrically connected with the second power supply, a first load static contact (6) and a second load static contact (7),
wherein the movement of the four-bar linkage acts on the first movable contact (1) and the second movable contact (2) at the same time, so that the manual dual-power transfer switch can be switched among the following states:
a state in which the first power supply is closed, wherein only the first movable contact (1) is connected between the first power supply terminal and the first load stationary contact (6);
a state in which the second power supply is closed, wherein only the second movable contact (2) is connected between the second power supply terminal and the second load stationary contact (7); and
a dual-open state in which the first movable contact (1) is not connected between the first power terminal (4) and the first load static contact (6) and the second movable contact (2) is not connected between the second power terminal (5) and the second load static contact (7),
**characterized in that** the four-bar linkage comprises a switch handle (8), a cam (9) and a connecting rod (10) connected between the switch handle (8) and the cam (9), one end of the connecting rod (10) is eccentrically connected to the switch handle (8) relative to a handle axis, the other end of the connecting rod (10) is eccentrically connected to the cam (9) relative to a cam axis (9-1), an outer contour of the cam (9) has a portion of a first radius of curvature (9-4) and a portion of a second radius of curvature (9-5), the cam (9) is configured to drive the first movable contact (1) and the second movable contact (2) with the portion of the second radius of curvature (9-5); and the second radius of curvature is larger than the first radius of curvature.

2. The manual dual-power transfer switch according to claim 1, wherein:
the switch handle (8) is pivotally mounted on the switch housing (3) around the handle axis (8-1);
the cam (9) rotates around the cam axis (9-1); and
rotation of the switch handle (8) drives rotation of the cam (9) through the connecting rod (10).

3. The manual dual-power transfer switch according to claim 2, wherein:
the manual dual-power transfer switch further comprises a first spring (11) and a second spring (12);
one end of the first spring (11) acts on the switch housing (3);
the other end of the first spring (11) acts on the first movable contact (1);
one end of the second spring (12) acts on the switch housing (3); and
the other end of the second spring (12) acts on the second movable contact (2).

4. The manual dual-power transfer switch according to claim 3, wherein:
the first movable contact (1) is pivotally connected to the first power terminal (4); and
the second movable contact (2) is pivotally connected to the second power terminal (5).

5. The manual dual-power transfer switch according to claim 3, wherein:
the first movable contact (1) is pivotally connected to the first load stationary contact (6); and
the second movable contact (2) is pivotally connected to the second load stationary contact (7).

6. The manual dual-power transfer switch according to claim 3, wherein:
in a state in which the first power supply is not closed, either end of the first movable contact (1) is not in contact with the first power supply terminal or the first load static contact (6);
in the state in which the first power supply is closed, both ends of the first movable contact (1) are in contact with the first power supply terminal and the first load static contact (6) at the same time;
in a state in which the second power supply is not closed, either end of the second movable contact (2) is not in contact with the second power supply terminal or the second load static contact (7);
in the state in which the second power supply is closed, both ends of the second movable contact (2) are in contact with the second power supply terminal and the second load stationary contact (7) at the same time.

7. The manual dual-power transfer switch according to claim 3, wherein:
the first movable contact (1) is provided with a first movable contact mating portion (1-1);
the second movable contact (2) is provided with a second movable contact mating portion (2-1); and
the first movable contact mating portion (1-1) and the second movable contact mating portion (2-1) keep contact with the outer contour of the cam (9).

8. The manual dual-power transfer switch according to claim 7, wherein:
the outer contour of the cam (9) has a first cam mating portion (9-2) and a second cam mating portion (9-3);
the outer contour of the cam also has a portion of a first radius of curvature and a portion of a second radius of curvature; and
the second radius of curvature is larger than the first radius of curvature.

9. the manual dual-power transfer switch according to claim 8, wherein:
when the switch handle (8) is in its first position, the first movable contact mating portion (1-1) keeps contact with the portion of the first radius of curvature radius the cam (9) and the second movable contact mating portion (2-1) keeps contact with the portion of the second radius of curvature radius of the cam (9) through the connecting rod (10), and at this time the first movable contact is connected between the first power supply terminal and the first load static contact (6);
when the switch handle (8) is in its second position, the first movable contact mating portion (1-1) keeps contact with the portion of the second radius of curvature of the cam (9) and the second movable contact mating portion (2-1) keeps contact with the portion of the first radius of curvature of the cam (9) through the connecting rod (10), and at this time the second movable contact (2) is connected between the second power terminal (5) and the second load static contact (7); and
when the switch handle (8) is in the dual-open position, the first movable contact mating portion (1-1) keeps in contact with the first cam mating portion (9-2) and the second movable contact mating portion (2-1) keeps in contact with the second cam mating portion (9-3) through the connecting rod (10), and at this time, the first movable contact (1) is not connected between the first power supply terminal and the first load static contact (6) and the second movable contact (2) is not connected between the second power supply terminal and the second load static contact (7).

## Patentansprüche

1. Manueller Umschalter für zwei Stromversorgungen, wobei der Schalter umfasst:
ein Vierstabgestänge, einen ersten beweglichen Kontakt (1), einen zweiten beweglichen Kontakt (2), einen ersten Stromanschluss (4), der elektrisch mit der ersten Stromversorgung verbunden ist, einen zweiten Stromanschluss (5), der elektrisch mit der zweiten Stromversorgung verbunden ist, einen ersten statischen Lastkontakt (6) und einen zweiten statischen Lastkontakt (7),
wobei die Bewegung des Vierstabgestänges gleichzeitig auf den ersten beweglichen Kontakt (1) und den zweiten beweglichen Kontakt (2) einwirkt, so dass der manuelle Umschalter für zwei Stromversorgungen zwischen den folgenden Zuständen umgeschaltet werden kann:
einem Zustand, in dem die erste Stromversorgung geschlossen ist, wobei nur der erste bewegliche Kontakt (1) zwischen dem ersten Stromversorgungsanschluss und dem ersten stationären Lastkontakt (6) verbunden ist;
einem Zustand, in dem die zweite Stromversorgung geschlossen ist, wobei nur der zweite bewegliche Kontakt (2) zwischen dem zweiten Stromversorgungsanschluss und dem zweiten stationären Lastkontakt (7) verbunden ist; und
einem doppelt geöffneten Zustand, in dem der erste bewegliche Kontakt (1) nicht zwischen dem ersten Stromanschluss (4) und dem ersten statischen Lastkontakt (6) verbunden ist und der zweite bewegliche Kontakt (2) nicht zwischen dem zweiten Stromanschluss (5) und dem zweiten statischen Lastkontakt (7) verbunden ist,
**dadurch gekennzeichnet, dass** das Vierstabgestänge einen Schaltergriff (8), einen Nocken (9) und eine zwischen dem Schaltergriff (8) und dem Nocken (9) verbundene Pleuelstange (10) umfasst, ein Ende der Pleuelstange (10) exzentrisch mit dem Schaltergriff (8) relativ zu einer Griffachse verbunden ist, das andere Ende der Pleuelstange (10) exzentrisch mit dem Nocken (9) relativ zu einer Nockenachse (9-1) verbunden ist, eine Außenkontur des Nockens (9) einen Abschnitt mit einem ersten Krümmungsradius (9-4) und einen Abschnitt mit einem zweiten Krümmungsradius (9-5) aufweist, der Nocken (9) so konfiguriert ist, dass er den ersten beweglichen Kontakt (1) und den zweiten beweglichen Kontakt (2) mit dem Abschnitt des zweiten Krümmungsradius (9-5) antreibt; und der zweite Krümmungsradius größer ist als der erste Krümmungsradius.

2. Manueller Umschalter für zwei Stromversorgungen nach Anspruch 1, wobei:
der Schaltergriff (8) an dem Schaltergehäuse (3) um die Griffachse (8-1) schwenkbar gelagert ist;
der Nocken (9) sich um die Nockenachse (9-1) dreht; und
eine Drehung des Schaltergriffs (8) eine Drehung des Nockens (9) über die Pleuelstange (10) antreibt.

3. Manueller Umschalter für zwei Stromversorgungen nach Anspruch 2, wobei:
der manuelle Umschalter für zwei Stromversorgungen außerdem eine erste Feder (11) und eine zweite Feder (12) umfasst;
ein Ende der ersten Feder (11) auf das Schaltergehäuse (3) einwirkt;
das andere Ende der ersten Feder (11) auf den ersten beweglichen Kontakt (1) einwirkt;
ein Ende der zweiten Feder (12) auf das Schaltergehäuse (3) einwirkt; und
das andere Ende der zweiten Feder (12) auf den zweiten beweglichen Kontakt (2) einwirkt.

4. Manueller Umschalter für zwei Stromversorgungen nach Anspruch 3, wobei:
der erste bewegliche Kontakt (1) schwenkbar mit dem ersten Stromanschluss (4) verbunden ist; und
der zweite bewegliche Kontakt (2) schwenkbar mit dem zweiten Stromanschluss (5) verbunden ist.

5. Manueller Umschalter für zwei Stromversorgungen nach Anspruch 3, wobei:
der erste bewegliche Kontakt (1) schwenkbar mit dem ersten stationären Lastkontakt (6) verbunden ist; und
der zweite bewegliche Kontakt (2) schwenkbar mit dem zweiten stationären Lastkontakt (7) verbunden ist.

6. Manueller Umschalter für zwei Stromversorgungen nach Anspruch 3, wobei:
in einem Zustand, in dem die erste Stromversorgung nicht geschlossen ist, ein Ende des ersten beweglichen Kontakts (1) nicht in Kontakt mit dem ersten Stromversorgungsanschluss oder dem ersten statischen Lastkontakt (6) steht;
in dem Zustand, in dem die erste Stromversorgung geschlossen ist, beide Enden des ersten beweglichen Kontakts (1) gleichzeitig in Kontakt mit dem ersten Stromversorgungsanschluss und dem ersten statischen Lastkontakt (6) stehen;
in einem Zustand, in dem die zweite Stromversorgung nicht geschlossen ist, ein Ende des zweiten beweglichen Kontakts (2) nicht in Kontakt mit dem zweiten Stromversorgungsanschluss oder dem zweiten statischen Lastkontakt (7) steht;
in dem Zustand, in dem die zweite Stromversorgung geschlossen ist, beide Enden des zweiten beweglichen Kontakts (2) gleichzeitig in Kontakt mit dem zweiten Stromversorgungsanschluss und dem zweiten stationären Lastkontakt (7) stehen.

7. Manueller Umschalter für zwei Stromversorgungen nach Anspruch 3, wobei:
der erste bewegliche Kontakt (1) mit einem ersten beweglichen Kontakteingriffsabschnitt (1-1) versehen ist;
der zweite bewegliche Kontakt (2) mit einem zweiten beweglichen Kontakteingriffsabschnitt (2-1) versehen ist; und
der erste bewegliche Kontakteingriffsabschnitt (1-1) und der zweite bewegliche Kontakteingriffsabschnitt (2-1) in Kontakt mit der Außenkontur des Nockens (9) bleiben.

8. Manueller Umschalter für zwei Stromversorgungen nach Anspruch 7, wobei:
die Außenkontur des Nockens (9) einen ersten Nockeneingriffsabschnitt (9-2) und einen zweiten Nockeneingriffsabschnitt (9-3) aufweist;
die Außenkontur des Nockens auch einen Abschnitt mit einem ersten Krümmungsradius und einen Abschnitt mit einem zweiten Krümmungsradius aufweist; und
der zweite Krümmungsradius größer ist als der erste Krümmungsradius.

9. Manueller Umschalter für zwei Stromversorgungen nach Anspruch 8, wobei:
wenn sich der Schaltergriff (8) in seiner ersten Position befindet, der erste bewegliche Kontakteingriffsabschnitt (1-1) mit dem Abschnitt des ersten Krümmungsradius des Nockens (9) in Kontakt bleibt und der zweite bewegliche Kontakteingriffsabschnitt (2-1) mit dem Abschnitt des zweiten Krümmungsradius des Nockens (9) über die Pleuelstange (10) in Kontakt bleibt, und zu diesem Zeitpunkt der erste bewegliche Kontakt zwischen dem ersten Stromversorgungsanschluss und dem ersten statischen Lastkontakt (6) verbunden ist;
wenn sich der Schaltergriff (8) in seiner zweiten Position befindet, der erste bewegliche Kontakteingriffsabschnitt (1-1) mit dem Abschnitt des zweiten Krümmungsradius des Nockens (9) in Kontakt bleibt und der zweite bewegliche Kontakteingriffsabschnitt (2-1) mit dem Abschnitt des ersten Krümmungsradius des Nockens (9) über die Pleuelstange (10) in Kontakt bleibt, und zu diesem Zeitpunkt der zweite bewegliche Kontakt (2) zwischen dem zweiten Stromanschluss (5) und dem zweiten statischen Lastkontakt (7) verbunden ist; und
wenn sich der Schaltergriff (8) in der doppelt geöffneten Position befindet, der erste bewegliche Kontakteingriffsabschnitt (1-1) mit dem ersten Nockeneingriffsabschnitt (9-2) in Kontakt bleibt und der zweite bewegliche Kontakteingriffsabschnitt (2-1) mit dem zweiten Nockeneingriffsabschnitt (9-3) über die Pleuelstange (10) in Kontakt bleibt, und zu diesem Zeitpunkt der erste bewegliche Kontakt (1) nicht zwischen dem ersten Stromversorgungsanschluss und dem ersten statischen Lastkontakt (6) verbunden ist und der zweite bewegliche Kontakt (2) nicht zwischen dem zweiten Stromversorgungsanschluss und dem zweiten statischen Lastkontakt (7) verbunden ist.

## Revendications

1. Commutateur de transfert manuel à double alimentation, le commutateur comprenant :
un mécanisme à quatre bras, un premier contact mobile (1), un second contact mobile (2), une première borne d'alimentation (4) connectée électriquement à la première source d'alimentation, une seconde borne d'alimentation (5) connectée électriquement à la seconde source d'alimentation, un premier contact statique de charge (6) et un second contact statique de charge (7),
dans lequel le mouvement du mécanisme à quatre bras agit simultanément sur le premier contact mobile (1) et le second contact mobile (2), de sorte que le commutateur de transfert manuel à double alimentation peut être commuté entre les états suivants :
un état dans lequel la première source d'alimentation est fermée, seul le premier contact mobile (1) étant connecté entre la première borne d'alimentation et le premier contact stationnaire de charge (6) ;
un état dans lequel la seconde source d'alimentation est fermée, seul le second contact mobile (2) étant connecté entre la seconde borne d'alimentation et le second contact stationnaire de charge (7) ; et
un état de double ouverture dans lequel le premier contact mobile (1) n'est pas connecté entre la première borne d'alimentation (4) et le premier contact statique de charge (6) et le second contact mobile (2) n'est pas connecté entre la seconde borne d'alimentation (5) et le second contact statique de charge (7),
**caractérisé en ce que** le mécanisme à quatre bras comprend une poignée de commutateur (8), une came (9) et une tige de liaison (10) reliée entre la poignée de commutateur (8) et la came (9), une extrémité de la tige de liaison (10) est reliée de manière excentrique à la poignée de commutateur (8) par rapport à un axe de poignée, l'autre extrémité de la tige de liaison (10) est reliée de manière excentrique à la came (9) par rapport à un axe de came (9-1), un contour extérieur de la came (9) présente une partie ayant un premier rayon de courbure (9-4) et une partie ayant un second rayon de courbure (9-5), la came (9) est configurée pour entraîner le premier contact mobile (1) et le second contact mobile (2) avec la partie ayant le second rayon de courbure (9-5) ; et le second rayon de courbure est plus grand que le premier rayon de courbure.

2. Commutateur de transfert manuel à double alimentation selon la revendication 1, dans lequel :
la poignée de commutateur (8) est montée de manière pivotante sur le boîtier de commutateur (3) autour de l'axe de poignée (8-1) ;
la came (9) tourne autour de l'axe de came (9-1) ; et
la rotation de la poignée de commutateur (8) entraîne la rotation de la came (9) par l'intermédiaire de la tige de liaison (10).

3. Commutateur de transfert manuel à double alimentation selon la revendication 2, dans lequel :
le commutateur de transfert manuel à double alimentation comprend en outre un premier ressort (11) et un second ressort (12) ;
une extrémité du premier ressort (11) agit sur le boîtier de commutateur (3) ;
l'autre extrémité du premier ressort (11) agit sur le premier contact mobile (1) ;
une extrémité du second ressort (12) agit sur le boîtier de commutateur (3) ; et
l'autre extrémité du second ressort (12) agit sur le second contact mobile (2).

4. Commutateur de transfert manuel à double alimentation selon la revendication 3, dans lequel :
le premier contact mobile (1) est relié de manière pivotante à la première borne d'alimentation (4) ; et
le second contact mobile (2) est relié de manière pivotante à la seconde borne d'alimentation (5).

5. Commutateur de transfert manuel à double alimentation selon la revendication 3, dans lequel :
le premier contact mobile (1) est relié de manière pivotante au premier contact stationnaire de charge (6) ; et
le second contact mobile (2) est relié de manière pivotante au second contact stationnaire de charge (7).

6. Commutateur de transfert manuel à double alimentation selon la revendication 3, dans lequel :
dans un état dans lequel la première source d'alimentation n'est pas fermée, l'une ou l'autre des extrémités du premier contact mobile (1) n'est pas en contact avec la première borne d'alimentation ou le premier contact statique de charge (6) ;
dans l'état dans lequel la première source d'alimentation est fermée, les deux extrémités du premier contact mobile (1) sont simultanément en contact avec la première borne d'alimentation et le premier contact statique de charge (6) ;
dans un état dans lequel la seconde source d'alimentation n'est pas fermée, l'une ou l'autre des extrémités du second contact mobile (2) n'est pas en contact avec la seconde borne d'alimentation ou le second contact statique de charge (7) ;
dans l'état dans lequel la seconde source d'alimentation est fermée, les deux extrémités du second contact mobile (2) sont simultanément en contact avec la seconde borne d'alimentation et le second contact stationnaire de charge (7).

7. Commutateur de transfert manuel à double alimentation selon la revendication 3, dans lequel :
le premier contact mobile (1) est pourvu d'une partie d'accouplement de premier contact mobile (1-1) ;
le second contact mobile (2) est pourvu d'une partie d'accouplement de second contact mobile (2-1) ; et
la partie d'accouplement de premier contact mobile (1 -1) et la partie d'accouplement de second contact mobile (2-1) sont en contact avec le contour extérieur de la came (9).

8. Commutateur de transfert manuel à double alimentation selon la revendication 7, dans lequel :
le contour extérieur de la came (9) présente une première partie d'accouplement de came (9-2) et une seconde partie d'accouplement de came (9-3) ;
le contour extérieur de la came présente également une partie ayant un premier rayon de courbure et une partie ayant un second rayon de courbure ; et
le second rayon de courbure est plus grand que le premier rayon de courbure.

9. Commutateur de transfert manuel à double alimentation selon la revendication 8, dans lequel :
lorsque la poignée de commutateur (8) est dans sa première position, la partie d'accouplement de premier contact mobile (1-1) reste en contact avec la partie ayant le premier rayon de courbure de la came (9) et la partie d'accouplement de second contact mobile (2-1) reste en contact avec la partie ayant le second rayon de courbure de la came (9) par l'intermédiaire de la tige de liaison (10), et à cet instant, le premier contact mobile est connecté entre la première borne d'alimentation et le premier contact statique de charge (6) ;
lorsque la poignée de commutateur (8) est dans sa seconde position, la partie d'accouplement de premier contact mobile (1-1) reste en contact avec la partie ayant le second rayon de courbure de la came (9) et la partie d'accouplement de second contact mobile (2-1) reste en contact avec la partie ayant le premier rayon de courbure de la came (9) par l'intermédiaire de la tige de liaison (10), et à cet instant, le second contact mobile (2) est connecté entre la seconde borne d'alimentation (5) et le second contact statique de charge (7) ; et
lorsque la poignée de commutateur (8) est dans la position de double ouverture, la partie d'accouplement de premier contact mobile (1 -1) reste en contact avec la première partie d'accouplement de came (9-2) et la partie d'accouplement de second contact mobile (2-1) reste en contact avec la seconde partie d'accouplement de came (9-3) par l'intermédiaire de la tige de liaison (10), et à cet instant, le premier contact mobile (1) n'est pas connecté entre la première borne d'alimentation et le premier contact statique de charge (6) et le second contact mobile (2) n'est pas connecté entre la seconde borne d'alimentation et le second contact statique de charge (7).
